# EUROPEAN PATENT APPLICATION

(11) **EP 1 850 029 A1**
(43) Date of publication of application: **31.10.2007**
(21) Application number: 06113023.3
(22) Date of filing: 25.04.2006
(51) Int. Cl.: F16F 9/06

(54) **Shock absorber for a vehicle**

(71) Applicant: Li, Po-Yi, Taoyuan City, Taoyuan (TW)
(72) Inventor: Li, Po-Yi, Taoyuan City, Taoyuan (TW)
(74) Representative: Chaillot, Geneviève

(57) **Abstract**

A shock absorber for a vehicle comprises an inner pipe (10), an outer pipe (20), and a piston assembly (11) moveably received in the inner pipe (10), and a bottom valve assembly (12) disposed at a bottom of the inner pipe (10). The bottom valve assembly (12) is provided with a plurality of oil lines, including a plurality of interconnected X-axial oil lines (121), Y-axial oil lines (122), unidirectional oil lines (123), and oil guiding lines (129). A unidirectional pressure valve (124), a spring (126), a micro-adjustment bolt (127), a micro-adjustment screw (127A), an oil seal (128A), a C ring (128B), a seal ring (128C), and a micro-adjustment button (128) are installed in the valve passage (125), respectively. By rotating the unidirectional pressure valve (124), the micro-adjustment screw (127A) and the micro-adjustment bolt (127) will move and compress the spring (126), and a pressing force of the spring (126) will be applied on the unidirectional pressure valve (124), this pressing force determines the flow rate of the oil (2A).

## Description

### BACKGROUND OF THE INVENTION

### Field of the Invention

The present invention relates to a shock absorber, and more particularly to a shock absorber for a vehicle, which can provide a good buffering effect and is less susceptible to fatigue after a long period of use.

### Description of the Prior Art

The existing shock absorbers for a vehicle are generally divided into single tube shock absorber or double-tube shock absorber, and usually use spring and hydraulic device to achieve a shock absorbing function. After a long period of use, however, most of the existing shock absorbers are susceptible to deterioration and have the following disadvantages:
First, they merely have the function of shock absorbing but are unable to compensate and adjust the consumed damping.
Second, the components inside the shock absorber are susceptible to deterioration and fatigue, causing the problems of noise, short life, and oil leakage.

To solve the abovementioned problems, another nitrogen type shock absorber was developed, wherein nitrogen gas is filled in the hydraulic system or a nitrogen cylinder is installed outside the hydraulic system. The pressure of the nitrogen cylinder is approximately 10 bar above. The nitrogen gas and the liquid inside the nitrogen cylinder don't contact each other but are separated by a rubber air bag or a piston. However, the nitrogen gas filled in the hydraulic system is unnecessary to be separated from the liquid thereof. Due to the properties of compressibility and elastic ity, air can work together with the spring to reduce the total weight and load of the spring. Meanwhile, the nitrogen gas is inert, so it is stable when is compressed and decompressed frequently. Another advantage of the nitrogen cylinder is that it can store more liquid and provide more heat dissipation surface.

The abovementioned shock absorber can provide a good shock absorbing effect, however, the nitrogen cylinder is not only expensive but occupies a certain amount of space, and it has to modify the lines in the vehicle (such as the brake line, ABS line, etc) when assembling the nitrogen cylinder.

The present invention has arisen to mitigate and/or obviate the afore-described disadvantages of the conventional shock absorber.

### SUMMARY OF THE INVENTION

The primary objective of the present invention is to provide a shock absorber for a vehicle, which can provide a good buffering effect and is less susceptible to fatigue after a long period of use.

The secondary objective of the present invention is to provide a shock absorber for a vehicle, since the nitrogen gas storage structure is arranged inside the hydraulic shock absorber, it adds no additional space and doesn't require extra refit work.

To achieve the two abovementioned objectives, the shock absorber for a vehicle in accordance with the present invention comprises an inner pipe received in an outer pipe, a piston assembly moveably received in the inner pipe, and a bottom valve assembly disposed at a bottom of the inner pipe. The bottom valve assembly is provided with a plurality of oil lines, including a plurality of interconnected X-axial oil lines, Y-axial oil lines, unidirectional oil lines, and oil guiding lines. A unidirectional pressure valve is inserted in a side of the bottom valve assembly for controlling the flow rate of the oil lines. The unidirectional pressure valve, the spring, a micro-adjustment bolt, a micro-adjustment screw, an oil seal, a C ring and a seal ring are installed in the valve passage, respectively, a micro-adjustment button with one end slightly protruding out of the surface of the outer pipe serves to control an opening pressure of the unidirectional pressure valve, therefore, by rotating the unidirectional pressure valve, the micro-adjustment screw and the micro-adjustment bolt will move and compress the spring, and a pressing force of the spring will be applied on the unidirectional pressure valve, this pressing force can also determine the flow rate of the oil.

The subject matter of the present invention is a shock absorber for a vehicle comprising:
an inner pipe and an outer pipe defining a hermetic space therebetween, a piston assembly moveably received in the inner pipe, a bottom valve assembly disposed at a bottom of the inner pipe, a piston separating the inner pipe into two chambers, each chamber being filled with oil and oil, respectively, the outer pipe being filled with nitrogen gas and oil, the bottom valve assembly separating the outer pipe from the inner pipe; characterized in that:
the bottom valve assembly is provided with a plurality of oil lines, including a plurality of interconnected X-axial oil lines, Y-axial oil lines, unidirectional oil lines, and oil guiding lines, a check valve assembly consisted of a spring and a valve is disposed at a junction between the inner pipe and the X-axial lines, a unidirectional pressure valve is inserted in a side of the bottom valve assembly for controlling the flow of the oil from the unidirectional oil lines to a valve passage and the oil guiding lines, the unidirectional pressure valve, the spring, a micro-adjustment bolt, a micro-adjustment screw, an oil seal, a C ring and a seal ring are installed in the valve passage, respectively, a micro-adjustment button with one end slightly protruding out of the surface of the outer pipe serves to control an opening pressure of the unidirectional pressure valve, therefore, by rotating the unidirectional pressure valve, the micro-adjustment screw and the micro-adjustment bolt will move and compress the spring, and a pressing force of the spring will be applied on the unidirectional pressure valve, this pressing force can also determine the flow rate of the oil.

Unidirectional oil holes, valves, and the piston can be disposed at one end of the piston assembly.

The check valve assembly can include a spring and a valve.

The present invention will be more clear from the following description when viewed together with the accompanying drawings, which show, for purpose of illustrations only, the preferred embodiment in accordance with the present invention.

### BRIEF DESCRIPTION OF THE DRAWINGS

Fig. 1 is a cross sectional view of a shock absorber for a vehicle in accordance with the present invention;
Fig. 2 is an exploded view of a bottom valve assembly in accordance with the present invention;
Fig. 3 is an assembly view of the bottom valve assembly in accordance with the present invention;
Fig. 4 is a cross sectional view of a part of the bottom valve assembly in accordance with the present invention; and
Fig. 5 is an operational view of the shock absorber for a vehicle in accordance with the present invention.

### DETAILED DESCRIPTION OF THE PREFERRED EMBODIMENTS

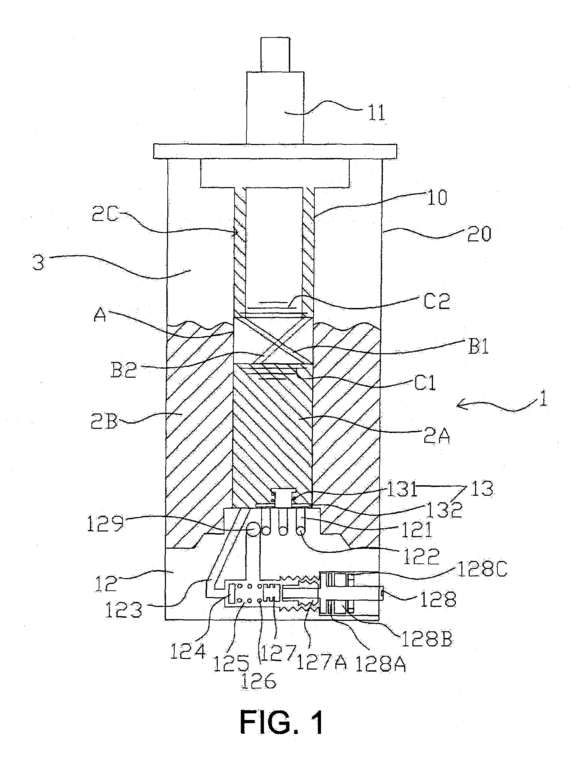

Referring to Fig. 1, a shock absorber 1 for a vehicle in accordance with the present invention comprises an inner pipe 10 and an outer pipe 20 that define a hermetic space. A piston assembly 11 is moveably received in the inner pipe 10. At an end of the piston assembly 11 are disposed a piston A, two unidirectional oil holes B1 and B2, and two valves C1 and C2. A bottom valve assembly 12 is disposed at the bottom of the inner pipe 10. The inner pipe 10 is divided by the piston A into two chambers that are filled with oil 2A and oil 2C, respectively. The outer pipe 20 is filled with nitrogen gas 3 and oil 2B. The bottom valve assembly 12 serves to separate the outer pipe 20 from the inner pipe 10.

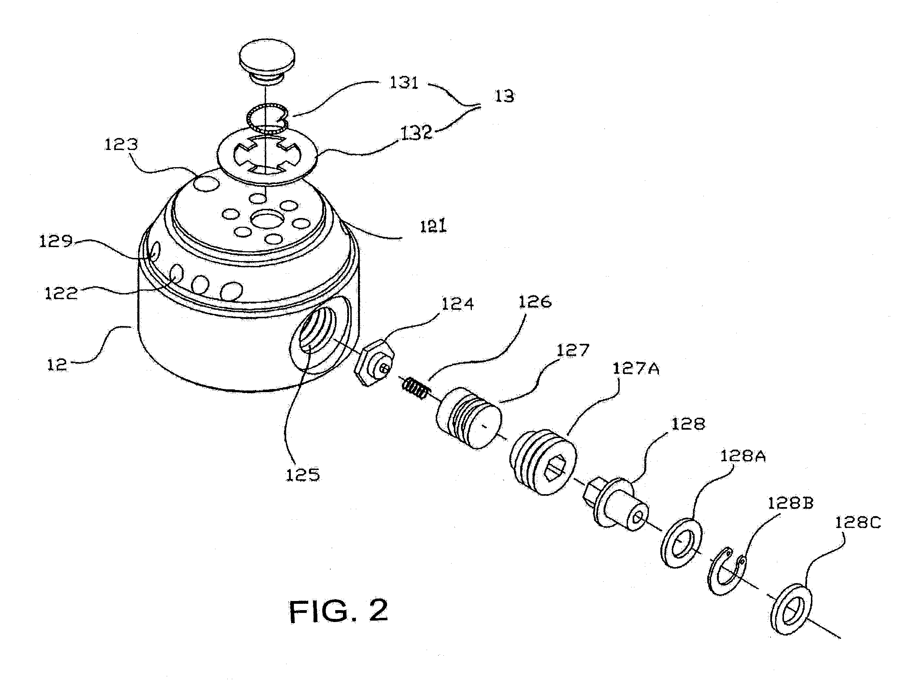

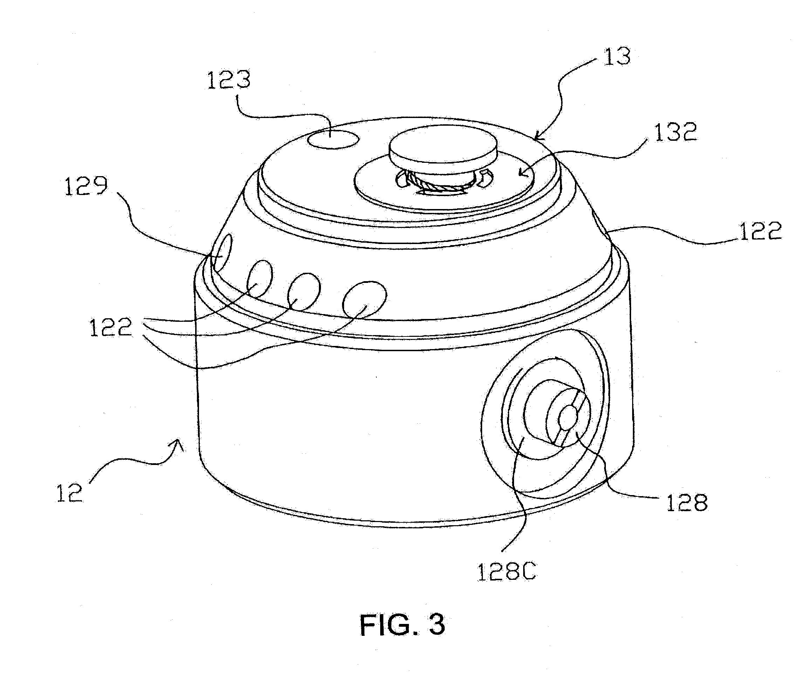

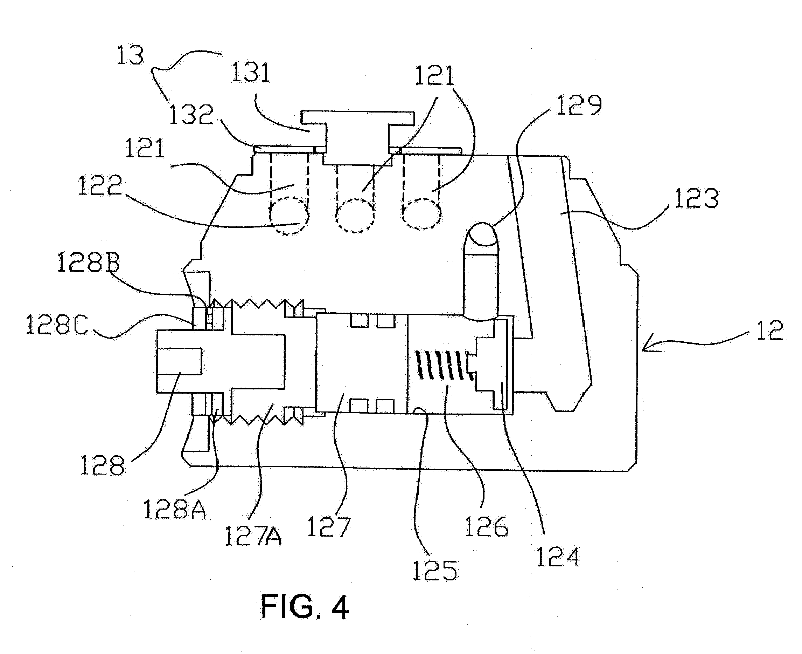

Referring to Figs. 2-4, the present invention is characterized in that the bottom valve assembly 12 is arranged with a plurality of oil lines, including a plurality of interconnected X-axial oil lines 121, Y-axial oil lines 122, unidirectional oil lines 123, and oil guiding lines 129. A check valve assembly 13 consisted of a spring 131 and a valve 132 is disposed at the junction between the inner pipe 10 and the X-axial lines 121. A unidirectional pressure valve 124 is inserted in a side of the bottom valve assembly 12 for controlling the flow of the oil 2A from the unidirectional oil lines 123 to the valve passage 125 and the oil guiding lines 129. The unidirectional pressure valve 124, a spring 126, a micro-adjustment bolt 127, a micro-adjustment screw 127A, an oil seal 128A, a C ring 128B and a seal ring 128C are installed in the valve passage 125, respectively. A micro-adjustment button 128 with one end slightly protruding out of the surface of the outer pipe 20 serves to control the opening pressure of the unidirectional pressure valve 124. therefore, by rotating the unidirectional pressure valve 124, the micro-adjustment screw 127A, the micro-adjustment bolt 127 will move and compress the spring 126. And the pressing force of the spring 126 will be applied on the unidirectional pressure valve 124, and this pressing force can also determine the flow rate of the oil 2A.

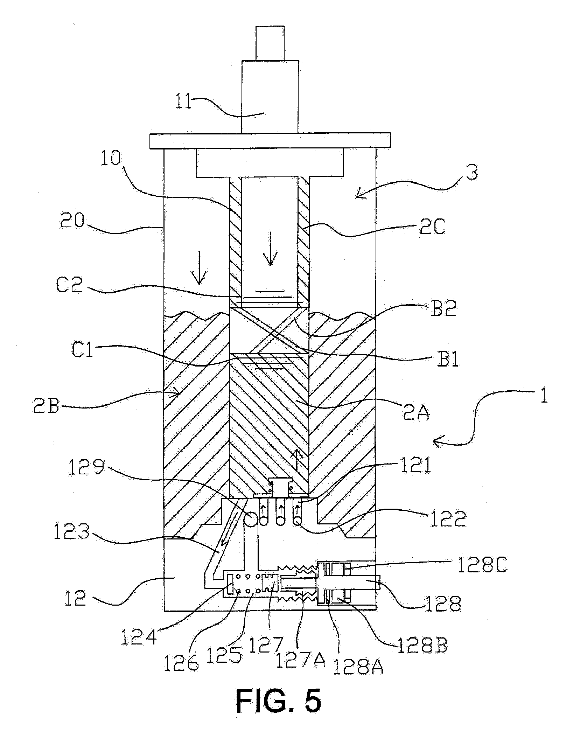

Referring to Fig. 5, when the piston assembly 11 moves downward, the oil 2A in the inner tube 10, under the pressing force of the piston assembly 11, will flow through the unidirectional oil hole B 1 into the upper oil chamber by pushing open the valve C2. The oil flowed into the upper oil chamber is designated by 2C. Since both ends of the inner pipe 10 are sealed, the oil 2A will be stopped by the check valve assembly 13 and guided into the unidirectional oil line 123, and then, by pushing open the unidirectional pressure valve 124, the oil 2A will flow through the valve passage 125, the oil guiding line 129 and into the outer pipe 20 and to be mixed with the oil 2B, until the compression action is finished. When the piston assembly 11 moves upward, the piston A will push the oil 2C in the upper oil chamber of the inner pipe 10. The oil 2C will flow through the unidirectional oil hole B2 in the piston A, and then push open the valve C1 and flow into the lower chamber of the inner pipe 10 and to be mixed with the oil 2A. At the same time, because of the vacuum theory and the pressure of the nitrogen gas 3, the oil 2B previously ejected into the outer pipe 20 from the inner pipe 10 will flow through the Y-axial oil lines 122, the X-axial oil lines 121 and into the lower chamber of the inner pie 10 by pushing open the valve 132 of the check valve assembly 13, and finally mixed with the oil 2A.

It is understood from the above description that the gas-liquid type shock absorber not only can provide a perfect buffering effect, but also can compensate all the deteriorated function, achieving the effect of prolonging the service life and freely adjusting the power of the shock absorber. Especially, since the nitrogen gas storage structure is arranged inside the hydraulic shock absorber, it adds no additional space and doesn't require extra refit work.

While we have shown and described various embodiments in accordance with the present invention, it is clear to those skilled in the art that further embodiments may be made without departing from the scope of the present invention.

## Claims

1. A shock absorber for a vehicle comprising:
an inner pipe (10) and an outer pipe (20) defining a hermetic space therebetween, a piston assembly (11) moveably received in the inner pipe (10), a bottom valve assembly (12) disposed at a bottom of the inner pipe (10), a piston (A) separating the inner pipe (10) into two chambers, each chamber being filled with oil (2A) and oil (2C), respectively, the outer pipe (20) being filled with nitrogen gas (3) and oil (2B), the bottom valve assembly (12) separating the outer pipe (20) from the inner pipe (10) ; **characterized in that**:
the bottom valve assembly (12) is provided with a plurality of oil lines, including a plurality of interconnected X-axial oil lines (121), Y-axial oil lines (122), unidirectional oil lines (123), and oil guiding lines (129), a check valve assembly (13) consisted of a spring (131) and a valve (132) is disposed at a junction between the inner pipe (10) and the X-axial lines (121), a unidirectional pressure valve (124) is inserted in a side of the bottom valve assembly (12) for controlling the flow of the oil (2A) from the unidirectional oil lines (123) to a valve passage (125) and the oil guiding lines (129), the unidirectional pressure valve (124), the spring (126), a micro-adjustment bolt (127), a micro-adjustment screw (127A), an oil seal (128A), a C ring (128B) and a seal ring (128C) are installed in the valve passage (125), respectively, a micro-adjustment button (128) with one end slightly protruding out of the surface of the outer pipe (20) serves to control an opening pressure of the unidirectional pressure valve (124), therefore, by rotating the unidirectional pressure valve (124), the micro-adjustment screw (127A) and the micro-adjustment bolt (127) will move and compress the spring (126), and a pressing force of the spring (126) will be applied on the unidirectional pressure valve (124), this pressing force can also determine the flow rate of the oil (2A).

2. The shock absorber for a vehicle as claimed in claim 1, wherein unidirectional oil holes (B1, B2), valves (C1, C2), and the piston (A) are disposed at one end of the piston assembly (11).

3. The shock absorber for a vehicle as claimed in claim 1, wherein the check valve assembly (13) includes a spring (131) and a valve (132).
